# EUROPÄISCHE PATENTANMELDUNG

(11) **EP 4 415 083 A1**
(43) Veröffentlichungstag der Anmeldung: **14.08.2024**
(21) Anmeldenummer: 24150135.2
(22) Anmeldetag: 03.01.2024
(51) Int. Cl.: H01M 8/04014, H01M 8/04089, H01M 8/04119

(54) **BRENNSTOFFZELLENABGASANLAGE**

(30) Priorität: 07.02.2023 DE 102023102864
(71) Anmelder: Purem GmbH, 66539 Neunkirchen (DE)
(72) Erfinder: Hammer, Jochen, Stuttgart (DE); Wink, Peter, Göppingen (DE); Mayer, Michael, Bempflingen (DE); Gaiser, Gerd, Reutlingen (DE); Schaller, Patrick, Bopfingen (DE); Juroszek, Tadeusz-Jozef, Esslingen (DE)
(74) Vertreter: Ruttensperger Lachnit Trossin Gomoll

(57) **Zusammenfassung**

Eine Brennstoffzellenabgasanlage, insbesondere für ein Fahrzeug, umfasst wenigstens eine Kondensatoreinheit (16') zur Aufnahme von von einer Brennstoffzelle (12) abgegebenem wasserhaltigem Brennstoffzellenabgas (B_{w}) und zur Abgabe von wasserentreichertem Brennstoffzellenabgas (Bₑ), wobei die wenigstens eine Kondensatoreinheit (16) eine Abscheideeinheit (20) zum Abscheiden von aus dem der wenigstens einen Kondensatoreinheit (16) zugeführten wasserhaltigen Brennstoffzellenabgas (B_{w}) auskondensiertem Wasser (W) umfasst, und wenigstens eine Wärmetauschereinheit (22), wobei die wenigstens eine Wärmetauschereinheit (22) von dem wenigstens einer Kondensatoreinheit (16) zugeführten wasserhaltigen Brennstoffzellenabgas (B_{w}) und von dem von wenigstens einer Kondensatoreinheit (16) abgegebenen wasserentreicherten Brennstoffzellenabgas (Bₑ) durchströmbar ist zur Übertragung von Wärme von dem wasserhaltigen Brennstoffzellenabgas (B_{w}) auf das wasserentreicherte Brennstoffzellenabgas (Bₑ).

## Beschreibung

Die die vorliegende Erfindung betrifft eine Brennstoffzellenabgasanlage, über welche beispielsweise in einem Fahrzeug das von einer zur Erzeugung elektrischer Energie betriebenen Brennstoffzelle ausgestoßene Brennstoffzellenabgas zur Umgebung abgegeben werden kann.

Zur Erzeugung elektrischer Energie in einer Brennstoffzelle werden einem Anodenbereich der Brennstoffzelle Wasserstoff bzw. ein Wasserstoff enthaltendes Gas und einem Kathodenbereich der Brennstoffzelle Sauerstoff bzw. ein Sauerstoff enthaltendes Gas, beispielsweise Luft, zugeführt. An einem Anodenabgasauslass des Anodenbereichs der Brennstoffzelle wird ein wasserstoffentreichertes Gas als Brennstoffzellenabgas abgegeben. An einem Kathodenabgasauslass des Kathodenbereichs der Brennstoffzelle wird ein sauerstoffentreichertes Gas als Brennstoffzellenabgas abgegeben. Abhängig vom Typ der Brennstoffzelle enthält primär das am Kathodenbereich der Brennstoffzelle abgegebene Brennstoffzellenabgas oder primär das am Anodenbereich der Brennstoffzelle abgegebene Brennstoffzellenabgas einen vergleichsweise großen Anteil an Wasser bzw. Wasserdampf. Wird stark mit Wasserdampf angereichertes Brennstoffzellenabgas mit einer relativen Feuchte im Bereich von 90-100 % über eine Brennstoffzellenabgasanlage zur Umgebung abgegeben, besteht insbesondere bei vergleichsweise niedrigen Umgebungstemperaturen die Gefahr, dass bei Kontakt mit der Umgebungsluft die Temperatur des Brennstoffzellenabgases stark abnimmt, was zum Auskondensieren von Wasser aus dem Brennstoffzellenabgas und damit zu einer starken Nebelbildung führen kann. Eine derartige Nebelbildung kann allein aufgrund der optischen Erscheinung als unangenehm und unerwünscht empfunden werden und führt insbesondere bei sehr niedrigen Umgebungstemperaturen zu der Gefahr, dass bei stehendem Fahrzeug in dem Bereich, in welchem das Brennstoffzellenabgas zur Umgebung austritt, eine Eisbildung auf dem Untergrund unter dem Fahrzeug auftritt.

Es ist die Aufgabe der vorliegenden Erfindung, eine Brennstoffzellenabgasanlage, insbesondere für ein Fahrzeug, vorzusehen, mit welcher eine Nebelbildung in dem zur Umgebung abgegebenen Brennstoffzellenabgas im Wesentlichen verhindert werden kann.

Erfindungsgemäß wird diese Aufgabe gelöst durch eine Brennstoffzellenabgasanlage, insbesondere für ein Fahrzeug, umfassend:
- wenigstens eine Kondensatoreinheit zur Aufnahme von von einer Brennstoffzelle abgegebenem wasserhaltigem Brennstoffzellenabgas und zur Abgabe von wasserentreichertem Brennstoffzellenabgas, wobei die wenigstens eine Kondensatoreinheit eine Abscheideeinheit zum Abscheiden von aus dem der wenigstens einen Kondensatoreinheit zugeführten wasserhaltigen Brennstoffzellenabgas auskondensiertem Wasser umfasst,
- wenigstens eine Wärmetauschereinheit, wobei die wenigstens eine Wärmetauschereinheit von dem wenigstens einer Kondensatoreinheit zugeführten wasserhaltigen Brennstoffzellenabgas und von dem von wenigstens einer Kondensatoreinheit abgegebenen wasserentreicherten Brennstoffzellenabgas durchströmbar ist zur Übertragung von Wärme von dem wasserhaltigen Brennstoffzellenabgas auf das wasserentreicherte Brennstoffzellenabgas.

Durch die bei der erfindungsgemäß aufgebauten Brennstoffzellenabgasanlage vorgesehene thermische Wechselwirkung zwischen dem von einer Brennstoffzelle mit vergleichsweise hoher Temperatur abgegebenen wasserhaltigen Brennstoffzellenabgas und dem in einer Kondensatoreinheit abgekühlten und wasserentreicherten Brennstoffzellenabgas wird einerseits dem eine Kondensatoreinheit zugeführten wasserhaltigen Brennstoffzellenabgas Wärme entzogen, wodurch der Prozess der Kondensation in einer stromabwärts folgenden Kondensatoreinheit unterstützt wird. Andererseits wird das mit abgesenkter Temperatur von einer Kondensatoreinheit abgegebene, wasserentreicherte Brennstoffzellenabgas durch diese thermische Wechselwirkung erwärmt, wodurch dessen relative Feuchte auf einen Wert deutlich unter 100%, vorzugsweise unter 90%, absinkt. Infolgedessen wird verhindert, dass bei Kontakt des wasserentreicherten, aber nicht vollständig von Wasser bzw. Wasserdampf befreiten Brennstoffzellenabgases mit der Umgebungsluft der Wassersättigungsgrad des Brennstoffzellenabgases spontan auf über 100 % ansteigt, wodurch die Nebelbildung von auch bei vergleichsweise niedrigen Umgebungstemperaturen zur Umgebung abgegebenem Brennstoffzellenabgas deutlich gemindert werden kann.

Für einen die Nebelbildung bei der Abgabe von Brennstoffzellenabgas zur Umgebung weiter mindernden Aufbau wird vorgeschlagen,
- dass wenigstens zwei Kondensatoreinheiten und wenigstens zwei Wärmetauschereinheiten vorgesehen sind,
- dass eine erste Wärmetauschereinheit der wenigstens zwei Wärmetauschereinheiten von dem einer ersten Kondensatoreinheit der wenigstens zwei Kondensatoreinheiten zugeführten wasserhaltigen Brennstoffzellenabgas durchströmbar ist,
- dass eine zweite Wärmetauschereinheit der wenigstens zwei Wärmetauschereinheiten von dem einer zweiten Kondensatoreinheit der wenigstens zwei Kondensatoreinheiten zugeführten wasserhaltigen Brennstoffzellenabgas durchströmbar ist,
- dass die erste Wärmetauschereinheit von dem von der zweiten Kondensatoreinheit abgegebenen wasserentreicherten Brennstoffzellenabgas durchströmbar ist zur Übertragung von Wärme von dem der ersten Kondensatoreinheit zugeführten wasserhaltigen Brennstoffzellenabgas auf das von der zweiten Kondensatoreinheit abgegebene wasserentreicherte Brennstoffzellenabgas, und
- dass die zweite Wärmetauschereinheit von dem von der ersten Kondensatoreinheit abgegebenen wasserentreicherten Brennstoffzellenabgas durchströmbar ist zur Übertragung von Wärme von dem der zweiten Kondensatoreinheit zugeführten wasserhaltigen Brennstoffzellenabgas auf das von der ersten Kondensatoreinheit abgegebene wasserentreicherte Brennstoffzellenabgas.

Zum Kühlen des wasserhaltigen Brennstoffzellenabgases kann die wenigstens eine Kondensatoreinheit von einem Kühlmedium durchströmbar oder/und umströmbar sein.

Dabei kann das Kühlmedium Umgebungsluft umfassen. Alternativ oder zusätzlich kann das Kühlmedium eine Kühlflüssigkeit umfassen, die beispielsweise in einem die Kühlflüssigkeit als Kältemittel nutzenden Kältemittelkreislauf zirkulieren kann.

Für eine effiziente thermische Wechselwirkung zwischen dem Kühlmedium und dem die wenigstens eine Kondensatoreinheit durchströmenden Brennstoffzellenabgas wird vorgeschlagen, dass die wenigstens eine Kondensatoreinheit eine Mehrzahl von von dem Kühlmedium durchströmbaren Kühlmediumkanälen oder/und eine Mehrzahl von von dem Kühlmedium umströmbaren Wärmeübertragungsrippen umfasst.

Die Erfindung betrifft ferner ein Brennstoffzellensystem, umfassend eine Brennstoffzelle und eine der Brennstoffzelle zugeordnete, erfindungsgemäß aufgebaute Brennstoffzellenabgasanlage.

Die vorliegende Erfindung wird nachfolgend mit Bezug auf die beiliegenden Figuren detailliert beschrieben. Es zeigt:
- Fig. 1: eine prinzipartige Darstellung eines Brennstoffzellensystems mit einer Brennstoffzelle und einer Brennstoffzellenabgasanlage;
- Fig. 2: in prinzipartiger Darstellung eine alternative Ausgestaltung einer Brennstoffzellenabgasanlage;
- Fig. 3: in prinzipartiger Darstellung eine Kondensatoreinheit für eine Brennstoffzellenabgasanlage mit verschiedenen Ausgestaltungsoptionen zur thermischen Wechselwirkung eines Kühlmediums mit der Kondensatoreinheit.

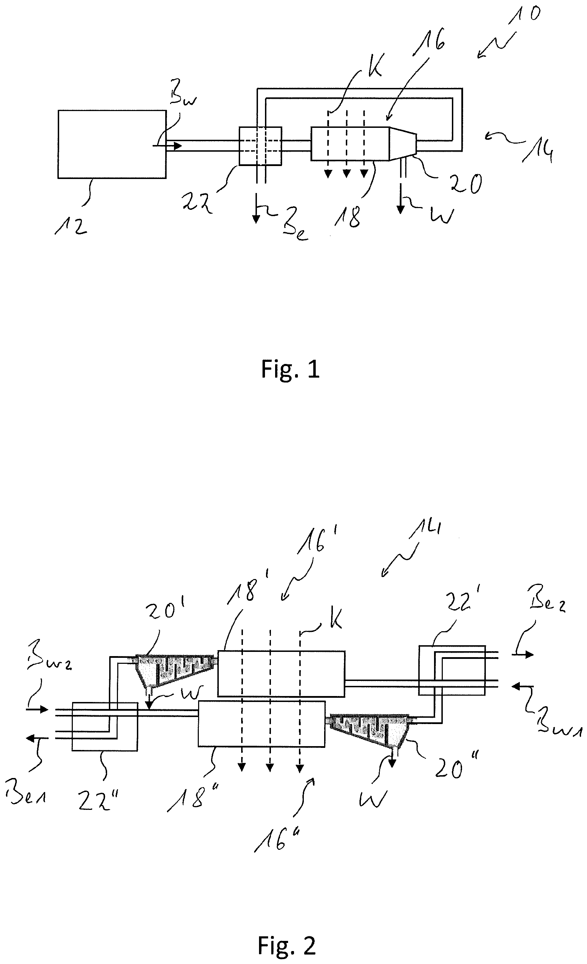

In Fig. 1 ist ein allgemein mit 10 bezeichnetes Brennstoffzellensystem in prinzipartiger Darstellung gezeigt. Das beispielsweise in einem Fahrzeug zur Erzeugung elektrischer Energie eingesetzte Brennstoffzellensystem 10 umfasst eine beispielsweise mit einem Brennstoffzellenmodul aufgebaute Brennstoffzelle 12. Der Brennstoffzelle 12 werden im Betrieb an einem nicht dargestellten Einlass eines Anodenbereichs Wasserstoff bzw. ein Wasserstoff enthaltendes Gas und an einem ebenfalls nicht dargestellten Einlass eines Kathodenbereichs Sauerstoff bzw. ein Sauerstoff enthaltendes Gas, insbesondere Luft, zugeführt. An einem nicht dargestellten Anodenabgasauslass wird ein wasserstoffentreichertes Gas abgegeben. An einem Kathodenabgasauslass des Kathodenbereichs der Brennstoffzelle 12 wird ein sauerstoffentreichertes Gas abgegeben. Diese beiden Abgasströme oder zumindest einer dieser beiden Abgasströme wird als Wasser bzw. Wasserdampf enthaltendes Brennstoffzellenabgas B_{w} in eine Brennstoffzellenabgasanlage 14 des Brennstoffzellensystems 10 abgegeben, über welche ein in nachfolgender Art und Weise teilweise von Wasser bzw. Wasserdampf befreites, wasserentreichertes Brennstoffzellenabgas Bₑ zur Umgebung abgegeben wird.

Die Brennstoffzellenabgasanlage 14 umfasst als zentralen Systembereich eine allgemein mit 16 bezeichnete Kondensatoreinheit. Die Kondensatoreinheit 16 umfasst einen Kondensatorbereich 18, in welchem beispielsweise durch thermische Wechselwirkung mit einem Kühlmedium K das wasserhaltige Brennstoffzellenabgas B_{w} gekühlt wird, so dass aus diesem Wasser W auskondensiert. Auf den Kondensatorbereich 18 folgt eine allgemein mit 20 bezeichnete Abscheideeinheit, in welcher das aus dem wasserhaltigen Brennstoffzellenabgas B_{w} auskondensierte Wasser W abgeschieden wird, so dass das wasserentreicherte Brennstoffzellenabgas Bₑ die Kondensatoreinheit 16 verlässt. Der Kondensatorbereich 18 und die Abscheideeinheit 20 der Kondensatoreinheit 16 können baulich miteinander verknüpft als eine Baugruppe beispielsweise in einem gemeinsamen Gehäuse angeordnet sein oder können als separate Baugruppen in Strömungsrichtung aufeinander folgend angeordnet sein.

In Zuordnung zu der Kondensatoreinheit 16 ist eine Wärmetauschereinheit 22 vorgesehen. Die Wärmetauschereinheit 22 ist stromaufwärts der Kondensatoreinheit 16, also in Strömungsrichtung zwischen der Brennstoffzelle 12 und der Kondensatoreinheit 16 von dem von der Brennstoffzelle 12 abgegebenen und der Kondensatoreinheit 16 zugeführten wasserhaltigen Brennstoffzellenabgas B_{w} durchströmbar. Die Wärmetauschereinheit 22 ist ferner von dem von der Kondensatoreinheit 16 abgegebenen wasserentreicherten Brennstoffzellenabgas Bₑ durchströmbar, bevor dieses zur Umgebung abgegeben wird, so dass eine thermische Wechselwirkung zwischen dem der Kondensatoreinheit 16 zugeführte wasserhaltigen Brennstoffzellenabgas B_{w} und dem von der Kondensatoreinheit 16 abgegebenen wasserentreicherten Brennstoffzellenabgas Bₑ erzeugt wird. Hierbei kann für eine effiziente thermische Wechselwirkung die Wärmetauschereinheit 22 beispielsweise als Kreuzstrom-Wärmetauscher oder als Gegenstrom-Wärmetauscher ausgebildet sein.

Das mit vergleichsweise hoher Temperatur von bis zu 100 °C von der Brennstoffzelle 12 abgegebene wasserhaltige Brennstoffzellenabgas B_{w} wird in der Kondensatoreinheit 16 auch durch die thermische Wechselwirkung mit dem Kühlmedium K gekühlt, was zur Folge hat, dass das die Kondensatoreinheit 16 bzw. die Abscheideeinheit 20 derselben verlassende wasserentreicherte Brennstoffzellenabgas Bₑ eine deutlich niedrigere Temperatur aufweist, als das der Kondensatoreinheit 16 zugeführte wasserhaltige Brennstoffzellenabgas B_{w}. Dies hat zur Folge, dass die in der Wärmetauschereinheit 22 auftretende thermische Wechselwirkung zu einer Abkühlung des der Kondensatoreinheit 16 zugeführten wasserhaltigen Brennstoffzellenabgases B_{w} und zu einer Erwärmung des von der Kondensatoreinheit 16 abgegebenen und zur Umgebung ausgestoßenen wasserentreicherten Brennstoffzellenabgases Bₑ führt.

Durch die Abkühlung des wasserhaltigen Brennstoffzellenabgases B_{w} stromaufwärts der Kondensatoreinheit 16, also vor Einleitung in diese, wird die Kondensation von in dem wasserhaltigen Brennstoffzellenabgas B_{w} beispielsweise in Form von Wasserdampf enthaltenen Wasser durch weitere Abkühlung vermittels des Kühlmediums K in der Kondensatoreinheit 16 unterstützt, so dass diese effizienter zum Auskondensieren und nachfolgenden Abscheiden von Wasser W betrieben werden kann.

Durch das Erwärmen des wasserentreicherten Brennstoffzellenabgases Bₑ vor dessen Abgabe zur Umgebung wird erreicht, dass die relative Feuchte des wasserentreicherten Brennstoffzellenabgases auf einen Wert von deutlich unter 100% gesenkt wird. Tritt das wasserentreicherte Brennstoffzellenabgas Bₑ mit einer relativen Feuchte von deutlich unter 100%, beispielsweise im Bereich von bzw. unter 90%, aus der Brennstoffzellenabgasanlage 14 zur Umgebung aus und kommt dabei in Kontakt mit der beispielsweise eine deutlich niedrigere Temperatur aufweisenden Umgebungsluft, wird ein spontaner Anstieg der relativen Feuchte und damit ein Erreichen bzw. Überschreiten eines Sättigungsgrads von 100% vermieden. Dies wiederum führt beim Austreten des noch eine Restmenge an Wasser bzw. Wasserdampf enthaltenden wasserentreicherten Brennstoffzellenabgases Bₑ zur Umgebung zu einer deutlich geringeren Nebelbildung.

Das an der Abscheideeinheit 20 abgeschiedene Wasser W kann in einem Wassertank gesammelt oder/und in flüssiger Form zur Umgebung abgegeben werden. Alternativ oder zusätzlich kann das Wasser W oder zumindest ein Teil des Wassers W zur Befeuchtung der Brennstoffzelle 12 in diese rückgespeist werden und beispielsweise zusammen mit dem Kathodengas in den Kathodenbereich eingeleitet werden. Auch besteht die Möglichkeit, dieses Wasser W in einem Fahrzeug als Waschwasser für einen Scheibenwischer bzw. auch für die Reinigung von Sensoren für das autonome Fahren zu nutzen. Auch die Befeuchtung der vermittels einer Klimaanlage thermisch konditioniert in einen Fahrzeuginnenraum einzuleitenden Luft kann dieses Wasser genutzt werden.

Die Fig. 2 zeigt eine alternative Ausgestaltung einer Brennstoffzellenabgasanlage 14, welche insbesondere dann Anwendung finden kann, wenn die in Fig. 1 dargestellte Brennstoffzelle 12 zwei Stapelmodule aufweist, welche jeweils einen Strom von wasserhaltigem Brennstoffzellenabgas B_{w1} bzw. B_{w2} erzeugen. Alternativ können diese beiden Ströme von wasserhaltigem Brennstoffzellenabgas B_{w1}, B_{w2} durch Aufteilen des von der mit beispielsweise nur einem Modul aufgebauten Brennstoffzelle 12 abgegebenen Stroms von wasserhaltigem Brennstoffzellenabgas B_{w} erzeugt werden.

Die in Fig. 2 dargestellte Brennstoffzellenabgasanlage 14 umfasst zwei Kondensatoreinheiten 16', 16" jeweils mit einem Kondensatorbereich 18', 18" und einer stromabwärts daran jeweils anschließenden Abscheideeinheit 20', 20". Stromaufwärts der ersten Kondensatoreinheit 16' durchströmt das wasserhaltige Brennstoffzellenabgas B_{W1} eine erste Wärmetauschereinheit 22'. Gleichermaßen durchströmt stromaufwärts der zweiten Kondensatoreinheit 16" das wasserhaltige Brennstoffzellenabgas B_{w2} eine zweite Wärmetauschereinheit 22".

Die erste Wärmetauschereinheit 22' wird ferner von dem von der Kondensatoreinheit 16" abgegebenen wasserentreicherten Brennstoffzellenabgas Bₑ₂ durchströmt. Gleichermaßen wird die zweite Wärmetauschereinheit 22" von dem von der ersten Kondensatoreinheit 16' abgegebenen wasserentreichertem Brennstoffzellenabgas Bₑ₁ durchströmt.

Bei der in Fig. 2 dargestellten Brennstoffzellenabgasanlage 14 wird wechselweise eine thermische Wechselwirkung zwischen dem die erste Kondensatoreinheit 16' durchströmenden Brennstoffzellenabgas und dem die zweite Kondensatoreinheit 16" durchströmenden Brennstoffzellenabgas erreicht. In jeder der beiden Wärmetauscheranordnungen 22', 22" entsteht die vorangehend mit Bezug auf die Fig. 1 bereits beschriebene thermische Wechselwirkung, bei welcher der jeweilige Strom von wasserentreichertem Brennstoffzellenabgas Bₑ₁, Bₑ₂ durch den jeweils zugeordneten Strom von wasserhaltigem Brennstoffzellenabgas B_{w2}, B_{w1} erwärmt wird und dieser dabei abgekühlt wird. Auch dabei weist das jeweilige zur Umgebung abgegebene wasserentreicherte Brennstoffzellenabgas Bₑ₁, Bₑ₂ aufgrund seiner angehobenen Temperatur eine deutlich unter 100% gesenkte relative Feuchte auf, so dass die Entstehung von Nebel weitestgehend unterdrückt werden kann.

Es ist darauf hinzuweisen, dass beispielsweise dann, wenn die Brennstoffzelle 12 mehr als zwei Brennstoffzellenmodule bzw. Stapel enthält, die Anzahl der in Wechselwirkung miteinander stehenden Brennstoffzellenabgasströme in der in Fig. 2 dargestellten Art und Weise entsprechend erhöht werden kann. Auch ist es beispielsweise möglich, dass zwei zueinander parallel wirkende Kondensatoreinheiten die von diesen jeweils abgegebenen Ströme von wasserentreichertem Brennstoffzellenabgas in die gleiche Wärmetauschereinheit leiten, um in dieser eine thermische Wechselwirkung mit wasserhaltigem Brennstoffzellenabgas herbeizuführen.

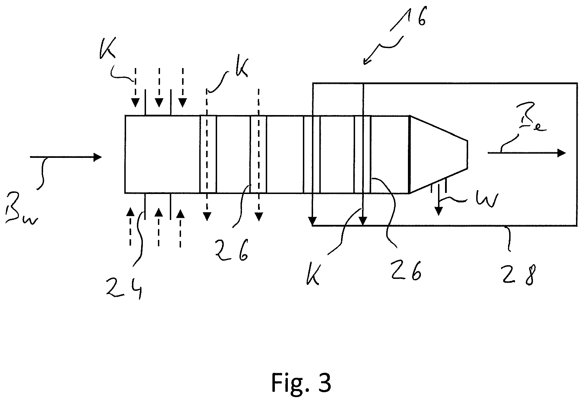

Die Fig. 3 veranschaulicht in prinzipartiger Darstellung den Aufbau beispielsweise der Kondensatoreinheit 16 der Fig. 1 oder der Kondensatoreinheiten 16', 16" der Fig. 2 insbesondere zur thermischen Wechselwirkung mit dem Kühlmedium K. In dem in Fig. 3 links dargestellten Bereich des Kondensatorbereichs 18 der Kondensatoreinheit 16 sind an der Kondensatoreinheit 16, beispielsweise an der Außenseite eines Gehäuses derselben, Wärmeübertragungsrippen 24 vorgesehen, welche von dem Kühlmedium K umströmt werden. Als Kühlmedium K wird dabei bevorzugt Umgebungsluft verwendet, welche im Allgemeinen eine deutlich niedrigere Temperatur aufweist, als das von der Brennstoffzelle abgegebene wasserhaltige Brennstoffzellenabgas B_{w}.

Bei der im mittleren Bereich der Fig. 3 dargestellten Ausgestaltungsvariante sind in der Kondensatoreinheit 16 bzw. im Kondensatorbereich 18 derselben mehrere Kühlmediumkanäle 26 vorgesehen, durch welche das beispielsweise wiederum durch Umgebungsluft bereitgestellte Kühlmedium K hindurchströmen kann. Die Kühlmediumkanäle 24 werden auch von dem in den Kondensatorbereich 18 eingeleiteten wasserhaltigen Brennstoffzellenabgas B_{w} umströmt, so dass dieses Wärme an das Kühlmedium K abgeben kann.

In dem in Fig. 3 rechts dargestellten Ausgestaltungsbeispiel werden die im Kondensatorbereich 18 vorgesehenen Kühlmediumkanäle 26 von einem in einem Kühlmediumkreislauf 28 zirkulierenden flüssigen Kühlmedium K durchströmt. Beispielsweise kann das flüssige Kühlmedium K ein in dem Kreislauf 28 zirkulierendes Kältemittel sein, das, so wie in einem Kältemittelkreislauf einer Klimaanlage, zwischen einem flüssigen und einem gasförmigen Aggregatzustand wechselt und dabei im Bereich der Kühlmediumkanäle 26 Wärme aufnimmt und diese in einem außerhalb des Kondensatorbereichs 18 liegenden Bereich beispielsweise zur Umgebungsluft abgibt oder zur weiteren Erhöhung der Effizienz auf das die Abscheideeinheit 20 verlassende wasserentreicherte Brennstoffzellenabgas Bₑ überträgt.

Insbesondere bei Einsatz von Umgebungsluft als Kühlmedium K kann diese durch ein Gebläse zum Durchströmen bzw. Umströmen des Kondensatorbereichs 18 gefördert werden. Weiter ist es besonders vorteilhaft, wenn für eine derartige Durchströmung bzw. Umströmung mit der Umgebungsluft die Kondensatoreinheit 16 bzw. der Kondensatorbereich 18 derselben in einem Fahrzeug so positioniert ist, dass allein aufgrund des Fahrtwindes ein effizienter Luftstrom generiert wird. Hierbei kann beispielsweise vorgesehen sein, dass die Kondensatoreinheit 16 in einem von der Umgebungsluft gut anströmbaren Frontbereich eines Fahrzeugs angeordnet ist oder im bzw. unter dem Unterbodenbereich eines Fahrzeugs angeordnet ist, an welchem die Umgebungsluft bei Voranbewegung eines Fahrzeugs entlangströmt.

Mit dem erfindungsgemäßen Aufbau einer Brennstoffzellenabgasanlage wird ein besonders effizienter Betrieb derselben zum Abscheiden von im Brennstoffzellenabgas enthaltenem Wasser und zum Verhindern der Nebelbildung beim Austritt des Brennstoffzellenabgases zur Umgebung erreicht. Dieser Vorteil kann sowohl bei Einsatz einer derartigen Brennstoffzellenabgasanlage in einem stationären System, als auch bei Einsatz in einem Fahrzeug genutzt werden. Durch die vermittels einer oder mehrerer Wärmetauschereinheiten eingeführte thermische Wechselwirkung wird es möglich, die Brennstoffzellenabgasanlage in einem großen Bereich möglicher Betriebssituationen, insbesondere Umgebungstemperaturen, effizient und mit nur geringer bzw. keiner Nebelbildung zu betreiben, was vor allem bei Einsatz in einem Fahrzeug vorteilhaft ist, da die Beeinträchtigung anderer Verkehrsteilnehmer durch eine Nebelbildung vermieden werden kann.

## Patentansprüche

1. Brennstoffzellenabgasanlage, insbesondere für ein Fahrzeug, umfassend:
- wenigstens eine Kondensatoreinheit (16; 16', 16") zur Aufnahme von von einer Brennstoffzelle (12) abgegebenem wasserhaltigem Brennstoffzellenabgas (B_{w}; B_{w1}, B_{w2}) und zur Abgabe von wasserentreichertem Brennstoffzellenabgas (Bₑ; Bₑ₁, Bₑ₂), wobei die wenigstens eine Kondensatoreinheit (16; 16', 16") eine Abscheideeinheit (20; 20', 20") zum Abscheiden von aus dem der wenigstens einen Kondensatoreinheit (16; 16', 16") zugeführten wasserhaltigen Brennstoffzellenabgas (B_{w}; B_{w1}, B_{w2}) auskondensiertem Wasser (W) umfasst,
- wenigstens eine Wärmetauschereinheit (22; 22', 22"), wobei die wenigstens eine Wärmetauschereinheit (22; 22', 22") von dem wenigstens einer Kondensatoreinheit (16; 16', 16") zugeführten wasserhaltigen Brennstoffzellenabgas (B_{w}; B_{w1}, B_{w2}) und von dem von wenigstens einer Kondensatoreinheit (16; 16', 16") abgegebenen wasserentreicherten Brennstoffzellenabgas (Bₑ; Bₑ₁, Bₑ₂) durchströmbar ist zur Übertragung von Wärme von dem wasserhaltigen Brennstoffzellenabgas (B_{w}; B_{w1}, B_{w2}) auf das wasserentreicherte Brennstoffzellenabgas (Bₑ; Bₑ₁, Bₑ₂).

2. Brennstoffzellenabgasanlage nach Anspruch 1, **dadurch gekennzeichnet,**
- **dass** wenigstens zwei Kondensatoreinheiten (16', 16") und wenigstens zwei Wärmetauschereinheiten (22', 22") vorgesehen sind,
- **dass** eine erste Wärmetauschereinheit (22') der wenigstens zwei Wärmetauschereinheiten (22', 22") von dem einer ersten Kondensatoreinheit (16') der wenigstens zwei Kondensatoreinheiten (16', 16") zugeführten wasserhaltigen Brennstoffzellenabgas (Bw₁) durchströmbar ist,
- **dass** eine zweite Wärmetauschereinheit (22") der wenigstens zwei Wärmetauschereinheiten (22', 22") von dem einer zweiten Kondensatoreinheit (16") der wenigstens zwei Kondensatoreinheiten (16', 16") zugeführten wasserhaltigen Brennstoffzellenabgas (B_{w2}) durchströmbar ist,
- **dass** die erste Wärmetauschereinheit (22') von dem von der zweiten Kondensatoreinheit (16") abgegebenen wasserentreicherten Brennstoffzellenabgas (Bₑ₂) durchströmbar ist zur Übertragung von Wärme von dem der ersten Kondensatoreinheit zugeführten wasserhaltigen Brennstoffzellenabgas (B_{w1}) auf das von der zweiten Kondensatoreinheit (16") abgegebene wasserentreicherte Brennstoffzellenabgas (Bₑ₂), und
- **dass** die zweite Wärmetauschereinheit (22") von dem von der ersten Kondensatoreinheit (Bₑ₁) abgegebenen wasserentreicherten Brennstoffzellenabgas durchströmbar ist zur Übertragung von Wärme von dem der zweiten Kondensatoreinheit (16") zugeführten wasserhaltigen Brennstoffzellenabgas (B_{w2}) auf das von der ersten Kondensatoreinheit (16') abgegebene wasserentreicherte Brennstoffzellenabgas (Bₑ₁).

3. Brennstoffzellenabgasanlage nach Anspruch 1 oder 2, **dadurch gekennzeichnet, dass** die wenigstens eine Kondensatoreinheit (16; 16', 16") von einem Kühlmedium (K) durchströmbar oder/und umströmbar ist.

4. Brennstoffzellenabgasanlage nach Anspruch 3, **dadurch gekennzeichnet, dass** das Kühlmedium (K) Umgebungsluft umfasst.

5. Brennstoffzellenabgasanlage nach Anspruch 3 oder 4, **dadurch gekennzeichnet, dass** das Kühlmedium (K) eine Kühlflüssigkeit umfasst.

6. Brennstoffzellenabgasanlage nach einem der Ansprüche 3-5, **dadurch gekennzeichnet, dass** die wenigstens eine Kondensatoreinheit (16; 16', 16") eine Mehrzahl von von dem Kühlmedium (K) durchströmbaren Kühlmediumkanälen (26) oder/und eine Mehrzahl von von dem Kühlmedium (K) umströmbaren Wärmeübertragungsrippen (24) umfasst.

7. Brennstoffzellensystem, umfassend eine Brennstoffzelle (12) und eine der Brennstoffzelle (12) zugeordnete Brennstoffzellenabgasanlage (14) nach einem der Ansprüche 1-6.
